# FASCICULE DE BREVET EUROPEEN

(11) **EP 3 759 440 B1**
(45) Date de publication et mention de la délivrance du brevet: **24.04.2024**
(21) Numéro de dépôt: 19711646.0
(22) Date de dépôt: 25.02.2019
(51) Int. Cl.: G01F 1/00, G01F 3/00

(54) **DISPOSITIF ET PROCÉDÉ DE MESURE DE DÉBIT D'UN LIQUIDE**
VERFAHREN UND VORRICHTUNG ZUR MESSUNG DER STRÖMUNGSRATE EINER FLÜSSIGKEIT
DEVICE AND METHOD FOR MEASURING THE FLOW RATE OF A LIQUID

(30) Priorité: 01.03.2018 FR 1851804
(43) Date de publication de la demande: 06.01.2021
(73) Titulaire: UNIVERSITE GRENOBLE ALPES, 38400 Saint Martin d'Hères (FR)
(72) Inventeur: PICARD, Cyril, 38120 SAINT-EGREVE (FR); CHARLAIX, Elisabeth, 05500 SAINT-JULIEN-EN-CHAMPSAUR (FR); SHARMA, Preeti, 38029 GRENOBLE CEDEX 2 (FR)
(74) Mandataire: Novaimo
(86) Numéro de dépôt international: PCT/FR2019/050428
(87) Numéro de publication internationale: WO 2019/166728

(56) Documents cités:
- FR-A1- 2 325 027
- FR-A1- 2 362 369
- FR-A1- 2 919 486
- US-A- 5 836 201
- US-A1- 2010 154 508

## Description

Des modes de réalisation de la présente invention concernent la mesure du débit d'un liquide circulant dans un conduit.

Il existe de nombreuses méthodes pour mesurer le débit d'un liquide.

Une méthode ancienne de mesure du débit d'un liquide consiste à recueillir dans un récipient le liquide issu d'un conduit et à mesurer le temps nécessaire pour collecter un volume donné du liquide ou à mesurer le volume du liquide collecté pendant une durée déterminée.

Des méthodes intrusives de mesure continue du débit d'un liquide consistent à placer un obstacle dans l'écoulement du liquide et à mesurer le déplacement de l'obstacle sous l'effet de l'écoulement ou à mesurer les forces exercées par l'écoulement du liquide sur l'obstacle.

Des méthodes non-intrusives de mesure continue du débit d'un liquide consistent à mesurer les variations de pressions induites par un Venturi ou un diaphragme traversés par l'écoulement du liquide.

D'autres méthodes de mesure continue du débit d'un liquide consistent à mesurer l'inertie thermique du liquide soumis localement à un échauffement.

D'autres méthodes de mesure continue du débit d'un liquide sont basées sur la mise en oeuvre de l'effet Doppler en présence de traceurs dans le liquide ou la fluorescence, en présence de molécules fluorescentes dans le liquide.

D'autres méthodes de mesure continue du débit d'un liquide, conducteur de l'électricité, consistent à mesurer des différences de potentiel, induites par l'écoulement du liquide.

Le document FR2362369A1 divulgue un procédé pour la surveillance de l'écoulement d'un liquide, de même pour le document US 5 836 201 A.

Les méthodes ci-dessus peuvent être adaptées pour la mesure de faibles débits mais présentent une sensibilité limitée.

La présente invention a pour but de proposer un dispositif de mesure du débit d'un liquide capable notamment de mesurer des très faibles débits, avec une très faible résolution, en particulier des débits inférieurs au nano litre par minute avec une précision de l'ordre du pico litre par minute.

Il est proposé un dispositif de mesure du débit d'un liquide circulant dans un conduit d'écoulement, d'amont en aval, qui comprend :
un organe d'obturation apte à fermer/ouvrir ledit conduit d'écoulement,
une membrane déformable obstruant une ouverture aménagée au travers de la paroi dudit conduit d'écoulement et située en amont dudit organe d'obturation, et
un dispositif électronique qui comprend
un moyen de détection pour détecter des déformations de ladite membrane déformable, apte à délivrer des signaux de déformation,
un moyen pour commander ledit organe d'obturation,
un moyen pour réaliser des relevés des valeurs d'au moins deux signaux de déformation, séparés par un intervalle de temps prédéterminé, établi lorsque l'électrovanne est fermée, et
un moyen de calcul pour calculer un volume de liquide en fonction des signaux relevés de déformation et pour calculer un débit en fonction dudit volume calculé et de l'intervalle de temps prédéterminé, le dispositif de mesure comprenant un second organe d'obturation apte à fermer/ouvrir ledit conduit d'écoulement, de sorte que ladite membrane déformable est située entre ledit organe d'obturation et ce second organe d'obturation, et comprenant un moyen pour commander ce second organe d'obturation.

Le dispositif électronique peut comprendre un moyen de mémorisation d'un abaque de correspondance entre les signaux de déformation et des volumes, ledit moyen de mémorisation étant relié audit moyen de calcul.

La membrane déformable peut être en une matière piézorésistive, en particulier en silicium.

Ledit moyen de détection peut comprendre un pont de Wheatstone dont les quatre branches incluent des jauges de déformations, la partie de la membrane déformable en regard de ladite ouverture dudit conduit d'écoulement étant pourvue de ces jauges de déformations.

Le conduit d'écoulement peut comprendre une veine amont, une veine aval et une chambre intermédiaire reliant lesdites veines, ledit organe d'obturation étant apte à fermer la veine aval et la membrane déformable obstruant une ouverture de la paroi de la chambre intermédiaire.

Il est également proposé un système qui comprend une source d'un liquide et un organe d'utilisation du liquide, et comprenant ledit dispositif de mesure de débit, dans lequel ledit conduit d'écoulement est relié à une sortie de l'organe d'utilisation.

Il est également proposé un procédé de mesure du débit d'un liquide circulant dans un conduit d'écoulement, d'amont en aval, pourvu d'un organe d'obturation et d'une membrane déformable obstruant une ouverture aménagée au travers de la paroi du conduit d'écoulement et située en amont dudit moyen d'obturation, comprenant les étapes suivantes :
placer le moyen d'obturation à l'état fermé de sorte à fermer le conduit d'écoulement,
détecter la déformation de la membrane déformable et réaliser des relevés des valeurs d'au moins deux signaux de déformation représentatifs de déformations de la membrane déformable, séparés par un intervalle de temps prédéterminé, et
placer le moyen d'obturation à l'état ouvert ;
et comprenant l'étape suivante :
   calculer un volume de liquide en fonction desdites valeurs desdits signaux de déformation et d'un abaque de correspondance entre des valeurs du signal de déformation et des valeurs de volume associées à des déformations de la membrane déformable,
   calculer un débit du liquide en fonction dudit volume calculé et dudit intervalle de temps prédéterminé.

Le procédé peut comprendre l'étape suivante : calculer ledit volume de liquide en fonction desdites valeurs desdits signaux de déformation et d'un abaque de correspondance entre des valeurs du signal de déformation et des valeurs de volume associées à des déformations de la membrane déformable.

Un dispositif de mesure du débit d'un liquide et un mode de fonctionnement vont maintenant être décrits à titre d'exemples de réalisation, illustrés par le dessin dans lequel :
- la figure 1 représente une vue schématique en coupe d'une partie mécanique d'un dispositif de mesure ;
- la figure 2 représente une vue extérieure de dessous du dispositif de mesure de la figure 1 ;
- la figure 3 représente un schéma électronique du dispositif de mesure ; et
- la figure 4 représente des diagrammes de fonctionnement du dispositif de mesure.

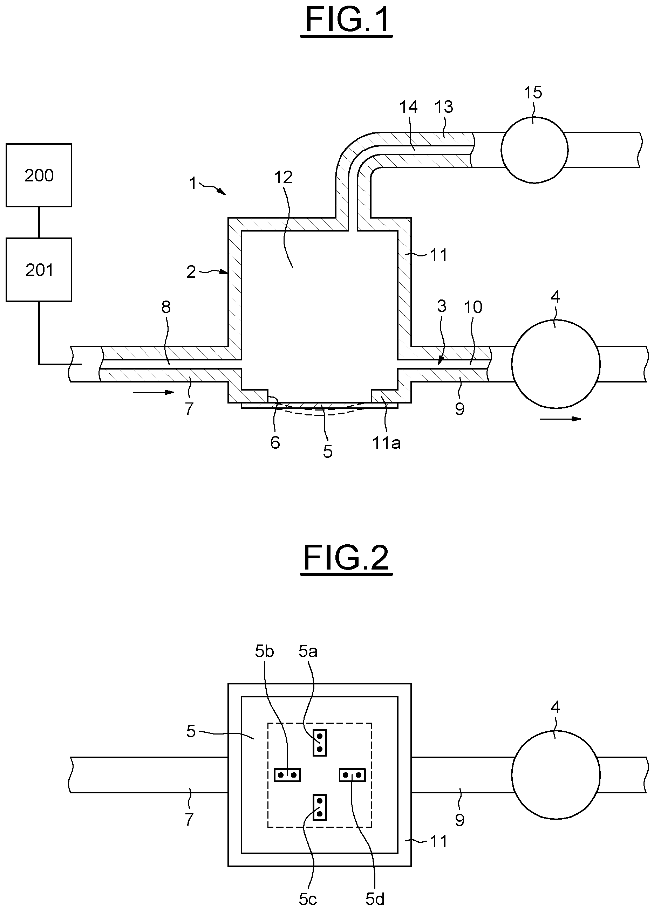

Sur les figures 1 et 2 est illustrée une partie mécanique d'un dispositif de mesure de débit 1 qui comprend un conduit 2 qui délimite un canal d'écoulement 3 dans lequel peut s'écouler un liquide, de l'amont vers l'aval, c'est-à-dire dans un sens.

Le dispositif de mesure de débit 1 comprend un organe d'obturation 4, formé par exemple par une électrovanne, apte à fermer/ouvrir le canal d'écoulement 3.

Le dispositif de mesure 1 comprend une membrane déformable 5 qui obstrue de façon étanche une ouverture 6 du conduit d'écoulement 3, aménagée en amont de l'organe d'obturation 4.

La périphérie de la membrane déformable 5 est fixée sur une portion de la paroi du conduit 2, autour de l'ouverture 6, de sorte que le liquide est au contact avec une portion centrale de la face intérieure de la membrane 5, tournée du côté du canal d'écoulement 3 et que la pression du liquide dans le conduit est apte à déformer cette portion centrale vers l'extérieur.

Selon une variante de réalisation, le conduit 2 comprend un tube amont 7 qui forme une veine amont 8 par laquelle le liquide arrive, un tube aval 9 qui forme une veine aval 10 par laquelle le liquide est évacué et qui est pourvu de l'organe d'obturation 4 et une enceinte intermédiaire 11 qui forme une chambre intermédiaire 12 située entre et reliant la veine amont et la veine aval.

Une portion plate 11a de l'enceinte intermédiaire 11 est pourvue de l'ouverture 6. La périphérie de la membrane déformable 5 est fixée, par exemple par collage, sur cette portion 11a. Par exemple, l'ouverture 6 et la membrane déformable 5 sont carrées et à côtés parallèles.

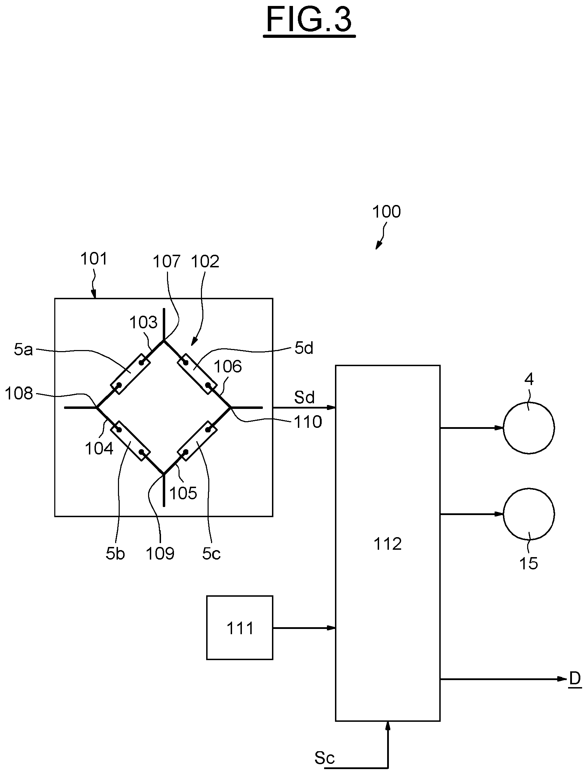

Le dispositif de mesure 1 comprend un dispositif électronique 100, illustré sur la figure 3, apte à calculer le débit d'un liquide circulant dans le canal d'écoulement 3.

Le dispositif électronique 100 comprend un moyen de détection 101 pour détecter des déformations de la membrane déformable 5, apte à délivrer un signal de déformation Sd qui est fonction de la déformation de la membrane déformable 5 sous l'effet de la pression exercée par le liquide.

Selon une variante de réalisation, le moyen de détection 101 comprend un pont de Wheatstone 102 dont les quatre branches 103, 104, 105 et 106 incluent des jauges de déformations formées par des rubans 5a, 5b, 5c et 5d, en une matière piézorésistive, qui sont prévus sur la face extérieure de la partie de la membrane déformable 5 en regard de l'ouverture 6. Des couples de points de connexion électrique 103, 104, 105, 106, distants, des rubans 5a, 5b, 5c et 5d sont respectivement reliés aux sommets 107, 108, 109 et 110 du pont de Wheatstone 102 par des fils de connexion électrique.

Avantageusement, d'une part les rubans 5a et 5c et les points de connexion électrique de ces rubans 5a et 5c sont situés sur une médiane de la membrane déformable 5 et symétriquement par rapport au centre de la membrane déformable 5 et d'autre part les rubans 5b et 5d et les points de connexion électrique de ces rubans 5b et 5d sont situés de part et d'autre de l'autre médiane de la membrane déformable 5 et symétriquement par rapport au centre de la membrane déformable. On entend par « médiane » une ligne qui s'étend perpendiculairement à deux côtés opposés et parallèles de la membrane déformable 5 et qui passe par le milieu de ces côtés.

Les rubans 5a, 5b, 5c et 5d sont une matière piézorésistive, c'est-à-dire une matière dont la résistance électrique varie en fonction d'une contrainte mécanique qui la déforme. Par exemple, les rubans 5a, 5b, 5c et 5d sont métalliques, en particulier à base de silicium. Par exemple, la membrane déformable 5 est métallique, en particulier à base de silicium. En particulier, les rubans 5a, 5b, 5c et 5d, conducteurs de l'électricité, sont réalisés par dépôt sur la membrane déformable 5, non conductrice de l'électricité, ou sur une couche diélectrique de la membrane déformable 5.

Le signal Sd est alors constitué par la tension de déséquilibre du pont de Wheatstone 102.

Le dispositif électronique 100 comprend une mémoire 111 dans laquelle est préenregistré un abaque, ou table de calcul, de correspondance entre des valeurs du signal de déformation Sd issu du moyen de détection 101 et des valeurs de volume V associées à des déformations de la membrane déformable 5.

Cet abaque est issu de mesures d'étalonnage réalisées par exemple de la manière suivante.

On fait circuler un liquide dans le canal d'écoulement 3 de sorte à remplir complètement et dégazer la chambre intermédiaire 12. A cet effet, l'enceinte intermédiaire 11 peut être équipée, optionnellement, d'un tube de purge 13 formant une veine de purge 14 et équipé d'une électrovanne de purge 15.

On ferme l'électrovanne 4 de sorte à fermer la veine aval 10 et l'électrovanne 15 de sorte à fermer la veine de purge 14.

On place le liquide à la pression atmosphérique. La membrane déformable 5 se trouve alors dans une position dite de référence, dans laquelle la membrane déformable 5 est généralement plate.

Puis, on introduit successivement des quantités supplémentaires déterminées de liquide dans la chambre intermédiaire 12 par la veine amont 8, qui induisent successivement des déformations correspondantes vers l'extérieur de la membrane déformable 5 sous l'effet de la pression du liquide et on relève les valeurs correspondantes du signal Sd.

Selon une variante de réalisation des mesures d'étalonnage, on fait circuler un liquide dans le canal d'écoulement 3 à des débits variables déterminés, mesurés par des moyens adaptés, et on relève à chaque fois les valeurs correspondantes du signal de déformation Sd issu du moyen de détection 101, de sorte à établir et mémoriser dans la mémoire 111 l'abaque correspondant.

La membrane déformable 5 ne perturbe pas l'arrivée du liquide dans la chambre intermédiaire 12.

Sur la figure 1 est illustrée en traits pointillés une déformation de la partie de la membrane déformable 5 située en regard de l'ouverture 6. Vue de l'intérieur de la chambre 12, la forme de cette déformation est concave et s'apparente à un dôme concave dont la périphérie est convexe.

Avantageusement, dans une première zone de déformations de la membrane déformable 5, depuis sa position de référence précitée, les valeurs du signal Sd sont situées approximativement sur une ligne droite, de sorte que l'abaque mémorisé dans la mémoire 111 peut être déterminé comme étant une telle droite.

Le circuit électronique 100 comprend un microcontrôleur programmé 112 qui est relié au moyen de détection 101, à la mémoire 111, à l'électrovanne 4 et, optionnellement, à l'électrovanne 15.

Avantageusement, le microcontrôleur programmé 112 peut être mis en oeuvre pour réaliser l'abaque précité.

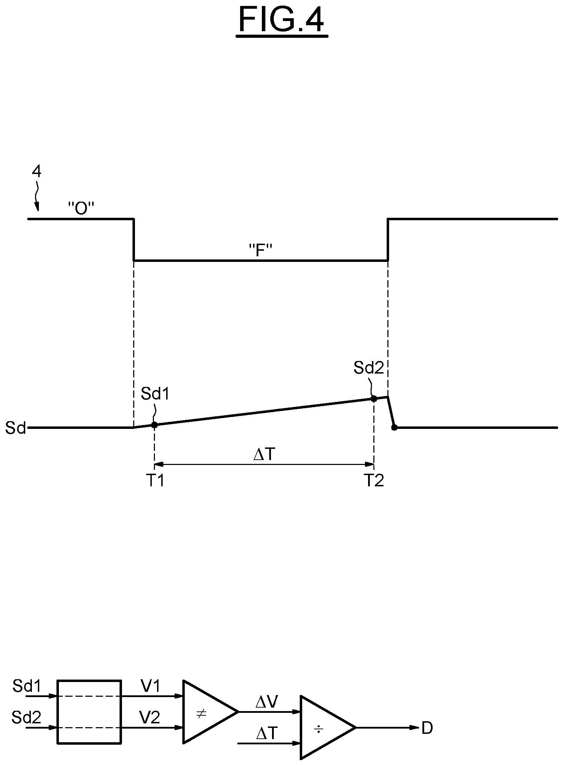

On va maintenant décrire le fonctionnement du dispositif de mesure 1, en référence en particulier à la figure 4.

L'électrovanne 4 étant à l'état ouvert « O » et l'électrovanne 15 étant à l'état fermé, un liquide issu d'une source circule dans le canal d'écoulement 3 de l'amont vers l'aval. La chambre intermédiaire 12 est remplie du liquide qui la traverse.

Pour la détermination du débit du liquide, le microcontrôleur 112, ayant reçu un ordre de commande Sc, exécute les étapes suivantes, comme illustré sur la figure 4.

Le microcontrôleur 112 commande la fermeture de l'électrovanne 4 pour obstruer la veine aval 10 et pour empêcher l'écoulement du liquide en aval de l'électrovanne 4.

L'électrovanne 4 étant à l'état fermé « F », le liquide continue d'arriver dans la chambre 12 et induit une déformation continue de la membrane déformable 5.

Le microcontrôleur 112 relève à un instant T1 la valeur Sd1 du signal Sd. Cet instant T1 peut être juste au moment où l'électrovanne 4 est placée à l'état fermé ou un peu après.

Au bout d'un délai prédéterminé ΔT, préprogrammé, le microcontrôleur 112 relève à un instant T2 la valeur Sd2 du signal Sd.

Ainsi, les relevés des valeurs Sd1 et Sd2 sont séparés par un intervalle de temps ΔT établi lorsque l'électrovanne 4 est fermée.

Quand la valeur du signal Sd2 est relevée, le microcontrôleur 112 extrait de l'abaque préenregistré la valeur du volume V1 correspondant à la valeur du signal Sd1 et la valeur du volume V2 correspondant à la valeur du signal Sd2 et calcule la valeur de la différence ΔV entre les valeurs des volumes V2 et V1.

Puis, le microcontrôleur 112 calcule la valeur du rapport D entre la valeur de la différence ΔV et la valeur du délai prédéterminé ΔT et délivre la valeur du rapport D, cette valeur constituant la valeur recherchée du débit du liquide arrivant par la veine amont 8.

La valeur du signal Sd2 étant relevée, le microcontrôleur 112 commande l'ouverture de l'électrovanne 4 pour rétablir la circulation du liquide dans le canal d'écoulement 3.

Parallèlement et optionnellement, le microcontrôleur 112 commande pendant une courte durée l'ouverture de l'électrovanne 15 afin de faciliter l'évacuation du surplus de liquide dans la chambre 12 résultant de la mesure.

Avantageusement, la durée prédéterminée ΔT est fixée en fonction d'un débit supposé du liquide, de sorte que les valeurs Sd1 et Sd2 soient situées sur l'abaque en ligne droite tel que défini précédemment.

Le dispositif de mesure 1 est particulièrement adapté pour effectuer des mesures de très faibles débits, pouvant être de l'ordre du nano litre par minute, avec une précision de l'ordre de quelques pico litres, la durée ΔT séparant les relevés des valeurs Sd1 et Sd2 étant de l'ordre de quelques minutes.

Selon un exemple de réalisation, les veines 8 et 10 peuvent présenter des sections de l'ordre de vingt-cinq centièmes de millimètre carré (0,25mm²), la chambre intermédiaire 12 peut être parallélépipédique et peut présenter des côtés de l'ordre de trois millimètres (3 mm) et une hauteur de l'ordre de quatorze millimètres (14 mm) (la membrane déformable 5 étant placée à une extrémité de la chambre intermédiaire 12), la membrane déformable 5 peut présenter des côtés de l'ordre de deux millimètres et demi (2,5 mm), la membrane déformable 5 peut présenter une épaisseur de l'ordre de treize microns (3 micromètres).

La paroi 11 de la chambre intermédiaire 12 est adaptée de sorte à réduire l'influence de la température extérieure. Par exemple, la paroi 11 de la chambre intermédiaire 12 peut être équipée d'un moyen de régulation de sa température.

Selon un exemple particulier d'utilisation, illustré sur la figure 1, le dispositif de mesure de débit 1 peut être inclus dans un système qui comprend une source amont 200 de liquide et un organe 201 d'utilisation du liquide issu de la source amont 200, le dispositif de mesure 1 étant relié à une sortie de l'organe d'utilisation 200 de sorte que le liquide soit évacué de l'organe d'utilisation 201 en passant par le canal d'écoulement 3 du dispositif de mesure 1 de l'amont vers l'aval.

Par exemple, la source 200 est un réservoir de quelques millilitres de liquide pressurisé par un gaz sous pression et l'organe d'utilisation 201 est un circuit nanofluidique comportant un canal de quelques microns de longueur et de section circulaire ayant un diamètre de l'ordre de cent nanomètres (100 nm).

Selon une variante de réalisation, le moyen de détection 101 pourrait comprendre un détecteur optique détectant les déplacements du point central de la membrane déformable 5.

Le dispositif de mesure de débit 1 comprend une seconde électrovanne d'obturation apte à fermer/ouvrir le conduit d'écoulement 3, placée sur le tube 7, de sorte à pouvoir mesurer le débit d'un liquide circulant dans le canal 3, dans l'autre sens que celui mentionné précédemment. Dans ce cas, le canal 10 devient un canal amont et le canal 7 devient un canal aval. La mesure de débit du liquide est effectuée de façon équivalente à ce qui a été décrit précédemment, le microcontrôleur 112 activant cette fois cette seconde électrovanne.

## Revendications

1. Dispositif de mesure du débit d'un liquide circulant dans un conduit d'écoulement, d'amont en aval, comprenant :
un organe d'obturation (4) apte à fermer/ouvrir ledit conduit d'écoulement (3),
une membrane déformable (5) obstruant une ouverture (6) aménagée au travers de la paroi dudit conduit d'écoulement et située en amont dudit organe d'obturation, et
un dispositif électronique (100) comprenant
un moyen de détection (101) pour détecter des déformations de ladite membrane déformable (5), apte à délivrer des signaux de déformation (Sd),
un moyen (112) pour commander ledit organe d'obturation (4),
un moyen (112) pour réaliser des relevés des valeurs (Sd1, Sd2) d'au moins deux signaux de déformation, séparés par un intervalle de temps prédéterminé (ΔT), établi lorsque l'électrovanne (4) est fermée, et
un moyen de calcul (112) pour calculer un volume de liquide (V) en fonction des signaux relevés de déformation (Sd1, Sd2) et pour calculer un débit (D) en fonction dudit volume calculé (V) et de l'intervalle de temps prédéterminé (ΔT),
le dispositif de mesure comprenant un second organe d'obturation apte à fermer/ouvrir ledit conduit d'écoulement (3), de sorte que ladite membrane déformable (5) est située entre ledit organe d'obturation et ce second organe d'obturation, et comprenant un moyen pour commander ce second organe d'obturation.

2. Dispositif selon la revendication 1, dans lequel le dispositif électronique (100) comprend un moyen de mémorisation (111) d'un abaque de correspondance entre les signaux de déformation et des volumes, ledit moyen de mémorisation (111) étant relié audit moyen de calcul (112).

3. Dispositif selon l'une des revendications 1 et 2, dans lequel la membrane déformable (5) est en une matière piézorésistive, en particulier en silicium.

4. Dispositif selon l'une quelconque des revendications précédentes, dans lequel ledit moyen de détection (101) comprend un pont de Wheatstone (102) dont les quatre branches (103, 104, 105 et 106) incluent des jauges de déformations (5a, 5b, 5c et 5d), la partie de la membrane déformable (5) en regard de ladite ouverture (6) dudit conduit d'écoulement (3) étant pourvue de ces jauges de déformations.

5. Dispositif selon l'une quelconque des revendications précédentes, dans lequel le conduit d'écoulement (3) comprend une veine amont (8), une veine aval (10) et une chambre intermédiaire (12) reliant lesdites veines, ledit organe d'obturation (4) étant apte à fermer la veine aval (10) et la membrane déformable (5) obstruant une ouverture (6) de la paroi de la chambre intermédiaire (12).

6. Système comprenant une source (200) d'un liquide et un organe (201) d'utilisation du liquide, et comprenant un dispositif de mesure de débit selon l'une quelconque des revendications précédentes, dans lequel ledit conduit d'écoulement (3) est relié à une sortie de l'organe d'utilisation.

7. Procédé de mesure du débit d'un liquide circulant dans un conduit d'écoulement (3), d'amont en aval, pourvu d'un organe d'obturation (4) et d'une membrane déformable (5) obstruant une ouverture (6) aménagée au travers de la paroi du conduit d'écoulement et située en amont dudit moyen d'obturation, comprenant les étapes suivantes :
placer le moyen d'obturation à l'état fermé de sorte à fermer le conduit d'écoulement,
détecter la déformation de la membrane déformable (5) et réaliser des relevés des valeurs (Sd1, Sd2) d'au moins deux signaux de déformation représentatifs de déformations de la membrane déformable (5), séparés par un intervalle de temps prédéterminé (ΔT), et
placer le moyen d'obturation à l'état ouvert ;
et comprenant l'étape suivante :
calculer un volume de liquide en fonction desdites valeurs (Sd1, Sd2) desdits signaux de déformation et d'un abaque de correspondance entre des valeurs du signal de déformation (Sd) et des valeurs de volume (V) associées à des déformations de la membrane déformable (5)
calculer un débit du liquide en fonction dudit volume calculé et dudit intervalle de temps prédéterminé (ΔT).

## Patentansprüche

1. Vorrichtung zur Messung des Durchflusses einer in einer Abflussrohrleitung von stromaufwärts nach stromabwärts strömenden Flüssigkeit, die enthält:
ein Verschlussorgan (4), das fähig ist, die Abflussrohrleitung (3) zu schließen/zu öffnen,
eine verformbare Membran (5), die eine Öffnung (6) verschließt, die durch die Wand der Abflussrohrleitung hindurch eingerichtet ist und sich stromaufwärts vor dem Verschlussorgan befindet, und
eine elektronische Vorrichtung (100), die enthält eine Erkennungseinrichtung (101) zur Erkennung von Verformungen der verformbaren Membran (5), die fähig ist, Verformungssignale (5d) zu liefern,
eine Einrichtung (112), um das Verschlussorgan (4) zu steuern,
eine Einrichtung (112), um Ablesungen der Werte (Sd1, Sd2) von mindestens zwei Verformungssignalen durchzuführen, die durch ein vorbestimmtes Zeitintervall (ΔT) getrennt sind, das erstellt wird, wenn das Elektroventil (4) geschlossen ist, und
eine Recheneinrichtung (112), um ein Flüssigkeitsvolumen (V) abhängig von den abgelesenen Verformungssignalen (Sd1, Sd2) zu berechnen, und um einen Durchfluss (D) abhängig von dem berechneten Volumen (V) und von dem vorbestimmten Zeitintervall (ΔT) zu berechnen,
wobei die Messvorrichtung ein zweites Verschlussorgan enthält, das fähig ist, die Abflussrohrleitung (3) zu schließen/zu öffnen, so dass die verformbare Membran (5) sich zwischen dem Verschlussorgan und diesem zweiten Verschlussorgan befindet,
und eine Einrichtung enthält, um dieses zweite Verschlussorgan zu steuern.

2. Vorrichtung nach Anspruch 1, wobei die elektronische Vorrichtung (100) eine Speichereinrichtung (111) eines Nomogramms einer Entsprechung zwischen den Verformungssignalen und Volumen enthält, wobei die Speichereinrichtung (111) mit der Recheneinrichtung (112) verbunden ist.

3. Vorrichtung nach einem der Ansprüche 1 und 2, wobei die verformbare Membran (5) aus einem piezoresistiven Stoff besteht, insbesondere aus Silicium.

4. Vorrichtung nach einem der vorhergehenden Ansprüche, wobei die Erkennungseinrichtung (101) eine Wheatstone-Brücke (102) enthält, deren vier Schenkel (103, 104, 105 und 106) Dehnungsmessstreifen (5a, 5b, 5c und 5d) enthalten, wobei der Teil der verformbaren Membran (5) gegenüber der Öffnung (6) der Abflussrohrleitung (3) mit diesen Dehnungsmessstreifen versehen ist.

5. Vorrichtung nach einem der vorhergehenden Ansprüche, wobei die Abflussrohrleitung (3) einen stromaufwärtigen Kanal (8), einen stromabwärtigen Kanal (10) und eine Zwischenkammer (12) enthält, die die Kanäle verbindet, wobei das Verschlussorgan (4) fähig ist, den stromabwärtigen Kanal (10) zu schließen, und die verformbare Membran (5) eine Öffnung (6) der Wand der Zwischenkammer (12) verschließt.

6. System, das eine Quelle (200) einer Flüssigkeit und ein Verwendungsorgan (201) der Flüssigkeit enthält, und das eine Durchflussmessvorrichtung nach einem der vorhergehenden Ansprüche enthält, wobei die Abflussrohrleitung (3) mit einem Ausgang des Verwendungsorgans verbunden ist.

7. Verfahren zur Messung des Durchflusses einer in einer Abflussrohrleitung (3) von stromaufwärts nach stromabwärts strömenden Flüssigkeit, die mit einem Verschlussorgan (4) und mit einer verformbaren Membran (5) versehen ist, die eine Öffnung (6) verschließt, die durch die Wand der Abflussrohrleitung hindurch eingerichtet ist und sich stromaufwärts vor der Verschlusseinrichtung befindet, das die folgenden Schritte enthält:
Versetzen der Verschlusseinrichtung in den geschlossenen Zustand, um die Abflussrohrleitung zu schließen,
Erkennen der Verformung der verformbaren Membran (5) und Durchführen von Ablesungen der Werte (Sd1, Sd2) von mindestens zwei Verformungssignalen, die für Verformungen der verformbaren Membran (5) repräsentativ sind, getrennt durch ein vorbestimmtes Zeitintervall (ΔT), und
Versetzen der Verschlusseinrichtung in den offenen Zustand;
und den folgenden Schritt enthält:
Berechnen eines Flüssigkeitsvolumens abhängig von den Werten (Sd1, Sd2) der Verformungssignale und einem Nomogramm einer Entsprechung zwischen Werten des Verformungssignals (Sd) und Volumenwerten (V), die Verformungen der verformbaren Membran (5) zugeordnet sind,
Berechnen eines Durchflusses der Flüssigkeit abhängig vom berechneten Volumen und vom vorbestimmten Zeitintervall (ΔT).

## Claims

1. Device for measuring the flow rate of a liquid circulating in a flow duct, from upstream to downstream, comprising:
a shutoff member (4) that is able to close/open said flow duct (3),
a deformable membrane (5) that closes off an opening (6) formed through the wall of said flow duct and situated upstream of said shutoff member, and
an electronic device (100) comprising
a detection means (101) for detecting deformations of said deformable membrane (5), able to deliver deformation signals (Sd),
a means (112) for controlling said shutoff member (4),
a means (112) for taking readings of the values (Sd 1, Sd2) of at least two deformation signals, separated by a predetermined time interval (ΔT), established when the solenoid valve (4) is closed, and
a calculation means (112) for calculating a liquid volume (V) on the basis of the read deformation signals (Sd1, Sd2) and for calculating a flow rate (D) on the basis of said calculated volume (V) and the predetermined time interval (ΔT)
the device for measuring comprising a second shutoff member that is able to close/open said flow duct (3), such that said deformable membrane (5) is situated between said shutoff member and this second shutoff member, and comprising a means for controlling this second shutoff member.

2. The device as claimed in claim 1, wherein the electronic device (100) comprises a storage means (111) for storing a chart of correspondence between the deformation signals and volumes, said storage means (111) being connected to said calculation means (112).

3. The device as claimed in either of claims 1 and 2, wherein the deformable membrane (5) is made of a piezoresistive material, in particular silicon.

4. The device as claimed in any one of the preceding claims, wherein said detection means (101) comprises a Wheatstone bridge (102), the four legs (103, 104, 105 and 106) of which include strain gauges (5a, 5b, 5c and 5d), the part of the deformable membrane (5) next to said opening (6) in said flow duct (3) being provided with these strain gauges.

5. The device as claimed in any one of the preceding claims, wherein the flow duct (3) comprises an upstream flow path (8), a downstream flow path (10) and an intermediate chamber (12) connecting said flow paths, said shutoff member (4) being able to close the downstream flow path (10) and the deformable membrane (5) closing off an opening (6) in the wall of the intermediate chamber (12).

6. A system comprising a source (200) of a liquid and a member (201) for utilizing the liquid, and comprising a device for measuring the flow rate as claimed in any one of the preceding claims, wherein said flow duct (3) is connected to an outlet of the utilization member.

7. A method for measuring the flow rate of a liquid circulating in a flow duct (3), from upstream to downstream, provided with a shutoff member (4) and a deformable membrane (5) that closes off an opening (6) formed through the wall of the flow duct and situated upstream of said shutoff means, comprising the following steps of:
putting the shutoff means in the closed state so as to close the flow duct,
detecting the deformation of the deformable membrane (5) and taking readings of the values (Sd1, Sd2) of at least two deformation signals representative of deformations of the deformable membrane (5), said signals being separated by a predetermined time interval (ΔT), and
putting the shutoff means in the open state;
and comprising the following step of:
calculating a volume of liquid on the basis of said values (Sd1, Sd2) of said deformation signals and of a chart of correspondence between values of the deformation signal (Sd) and volume (V) values associated with deformations of the deformable membrane (5),
calculating a flow rate of the liquid on the basis of said calculated volume and of said predetermined time interval (ΔT).
